# EUROPEAN PATENT APPLICATION

(11) **EP 3 169 095 A1**
(43) Date of publication of application: **17.05.2017**
(21) Application number: 16167197.9
(22) Date of filing: 03.02.2008
(51) Int. Cl.: H04W 8/26

(54) **METHOD AND APPARATUS FOR OBTAINING TEMPORARY IDENTIFIER**

(30) Priority: 05.02.2007 CN 200710000422
(62) Divisional of application: 08706463.0
(71) Applicant: Huawei Technologies Co., Ltd., Longgang District Shenzhen, Guangdong 518129 (CN)
(72) Inventor: GAO, Yiming, shenzhen Guangdong (CN); CHEN, Bin, shenzhen Guangdong (CN)
(74) Representative: Kreuz, Georg Maria

(57) **Abstract**

A method and apparatus for obtaining a temporary identifier are disclosed. The method includes: receiving a data frame and obtaining from the data frame a temporary identifier that identifies a user in a Radio Resource Control (RRC) connected state. After obtaining the one or more temporary identifiers; the method further includes: associating the one or more temporary identifiers with corresponding user data; broadcasting the one or more temporary identifiers, instructing a user corresponding to the one or more temporary identifiers to receive user data, and transmitting the user data associated with the one or more temporary identifiers. According to the present invention, the NodeB is notified of the radio network temporary identifier allocated to a user in the RRC connected state so that the NodeB can associate the one or more temporary identifiers with the corresponding user data and thereby schedule data and transmit user data for the user smoothly.

## Description

### Field of the Invention

The present invention relates to communication technologies, and in particular, to a method for obtaining a temporary identifier of a user in a Radio Resource Control (RRC) connected state, a temporary identifier transmitting apparatus and a temporary identifier obtaining apparatus.

### Background of the Invention

Functionally, a 3rd Generation Partnership Project (3GPP) system includes three parts: the Core Network (CN), the Universal Mobile Telecommunications System (UMTS) Radio Access Network (UTRAN), and the User Equipment (UE). The CN processes switching and routing for calls and data connections with external networks; the UTRAN processes all functions related to radio access; the UE is an interface with a user. The interface between CN and UTRAN is an Iu interface and the interface between UTRAN and UE is a Uu interface. The UTRAN includes a Radio Network Controller (RNC) and one or more NodeBs. The RNC and the NodeB communicate via the Iub interface.

In the 3GPP protocol stack, the Uu interface mainly processes the transmission of radio data; the Iub interface and the Iu interface support wired connections (optical fiber or cable), and use the Media Access Control (MAC) protocol and the Radio Link Control (RLC) protocol to provide data transport and switching. The Radio Resource Control (RRC) protocol completes the management and allocation of radio resources. The NodeB Application Part (NBAP) processes signaling over the Iub interface and the Frame Protocol (FP) processes data transmission of all interfaces.

When there is an RRC signaling connection between the UE and the UTRAN, the UE is in the RRC connected state. The RRC connection is a two-way point-to-point connection established between the UE and the RRC layer of the UTRAN. One UE has at most one RRC connection. The RRC connection transmits radio network signaling between the UE and the UTRAN, for example, to allocate radio resources. The RRC connection is established when a call is set up and released when the conversation ends, and always held during the period of the call. An RRC connection may be established on two types of channels: common channel and dedicated channel. The RRC connected state further includes the following sub-states: CELL_DCH, CELL_FACH, CELL_PCH, and URA_PCH, where CELL-DCH means RRC connection on a dedicated channel at the cell level, CELL_FACH and CELL_PCH indicate RRC connection on a common channel at the cell level, and URA_PCH means RRC connection at the UTRAN Registration Area (URA) level. These sub-states can transit to each other when conditions are met.

According to the current protocol, only a UE in the CELL_DCH state can receive Speed Downlink Packet Access (HSDPA) related channels, including HS-SCCH, HS-PDSCH, and HS-DSCH. The High-Speed Downlink Shared Channel (HS-DSCH) is a transport channel adopted to transport user data. The HS-DSCH is mapped to the High Speed Shared Control Channel (HS-SCCH), and High-Speed Physical Downlink Shared Channel (HS-PDSCH) at the physical layer, where the HS-SCCH indicates user information on the HS-PDSCH, code modulation information and transmission format and the HS-PDSCH transmits data information. The HS-SCCH and HS-PDSCH are both downlink common physical channels that are shared by all users. The HS-SCCH is transmitted in precedence to the HS-PDSCH so that the user can decide whether to receive and how to receive subsequent HS-PDSCH data after decoding necessary information.

The RNC allocates an HS-DSCH Radio Network Temporary Identifier (H-RNTI) to every UE in the CELL-PCH state to identify the UE that receives the HS-DSCH. The H-RNTI is sent on the HS-SCCH and indicates which UE to receive the data. The UE listens to and reads data on the HS-SCCH and matches the H-RNTI. If the H-RNTI is the same as its own, the UE continues to receive information on the HS-PDSCH next to the HS-SCCH. However, a UE in the CELL_PACH state can only map the DTCH/DCCH to the FACH and RACH channels, unable to receive HSDPA related channels and to utilize the HSDPA mechanism to increase the data transport efficiency.

### Summary of the Invention

An embodiment of the invention provides a method for obtaining a temporary identifier. The method includes: receiving a data frame and obtaining from the data frame a temporary identifier that identifies a user in a Radio Resource Control (RRC) connected state.

Another embodiment of the invention provides a temporary identifier transmitting apparatus. The apparatus includes an allocating unit and a transmitting unit. The allocating unit is adapted to allocate a radio network temporary identifier to a user in an RRC connected state; and the transmitting unit is adapted to transmit the one or more temporary identifiers allocated by the allocating unit to a NodeB.

Another embodiment of the invention provides a temporary identifier obtaining apparatus. The apparatus includes: a receiving unit, adapted to receive a data frame from a Radio Network Controller (RNC); and an obtaining unit, adapted to obtain from the data frame a temporary identifier that identifies a user in an RRC connected state.

### Brief Description of the Drawings

Figure 1 shows one procedure in a first embodiment of the invention;
Figure 2 shows another procedure in the first embodiment of the invention;
Figure 3 shows the procedure in a second embodiment of the invention;
Figure 4 shows the format of an Iub FP frame in an embodiment of the invention;
Figure 5 shows the structure of a temporary identifier transmitting apparatus in an embodiment of the invention;
Figure 6 shows one structure of a temporary identifier obtaining apparatus in an embodiment of the invention; and
Figure 7 shows another structure of the temporary identifier obtaining apparatus in an embodiment of the invention.

### Detailed Description of the Invention

The present invention is hereinafter described in detail with reference to some exemplary embodiments and the accompanying drawings.

When the RNC allocates a dedicated H-RNTI to each UE in the CELL_FACH state, because the NodeB needs to schedule resources, the NodeB must know the allocation of H-RNTIs. The following two embodiments describe the process that the RNC notifies the NodeB of an allocated H-RNTI and the process that the NodeB schedules and transmits user data.

Embodiment 1: In this embodiment, the RNC notifies the NodeB of an H-RNTI via Iub Control Plane (CP) signaling, such as an NBAP message and the NodeB schedules and transmits user data.

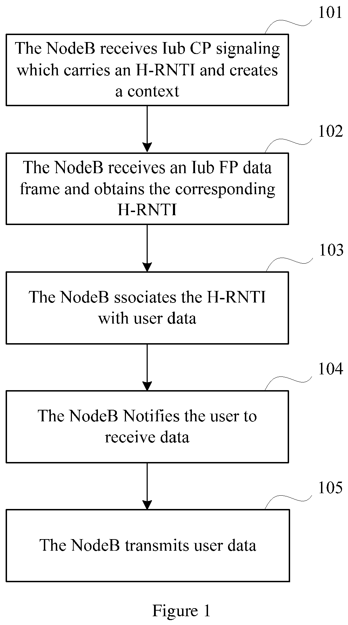

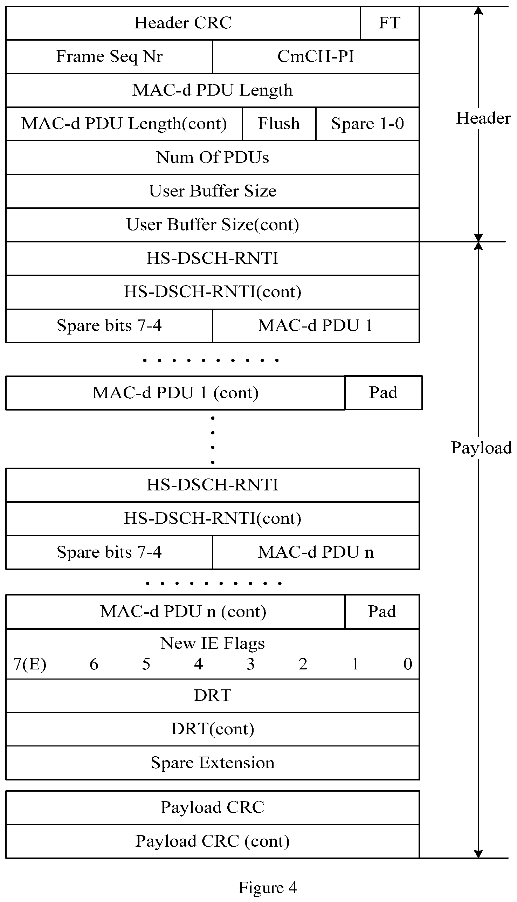

Figure 1 shows the procedure in the first embodiment of the invention, including:
Step 101: The RNC sends an NBAP message to the NodeB. The NBAP message contains the H-RNTI allocated by the RNC to a UE in the CELL_FACH state. The NodeB processes the message internally upon reception of the message. The processing includes creating and storing a corresponding content, such as context, for each received H-RNTI.
Step 102: After the RNC notifies the NodeB of the dedicated H-RNTI of the UE in the CELL_FACH state, the RNC sends an Iub HS-DSCH FP data frame to the NodeB via the Iub interface. The transmitted data frame carries the H-RNTI of the UE in the CELL_FACH state and the corresponding user data. The structure of an Iub HS-DSCH FP data frame is shown in Figure 4. The data frame includes a header part and a payload part. The payload part includes in turn Protocol Data Unit (PDU) data of one or more users. The PDU field of every user includes an HS-DSCH-RNTI field that records an H-RNTI to identify the target user of the corresponding PDU. The PDU shown in Figure 4 is not limited to the MAC-d PDU but also may be the MAC-c or another type of PDU.

When the NodeB receives the Iub HS-DSCH FP data frame, the NodeB obtains the user data, for example, MAC-d PDU, in the data frame and the corresponding H-RNTI which identifies the user data.

Step 103: The NodeB associates the obtained H-RNTI with the corresponding user data.

In this step, the NodeB reorganizes the data in the payload part of the Iub HS-DSCH FP frame to reconstruct the HS-DSCH data frame so that the reconstructed HS-DSCH data frame carries PDUs of one user. The reconstructed HS-DSCH data frame carries a Transmission Sequence Number (TSN) which indentifies the HS-DSCH data frame. The process that the NodeB reconstructs the data frame may be implemented according to the prior art.

The NodeB records the TSN of the HS-DSCH data frame in the related content, such as context, of the corresponding H-RNTI to associate the H-RNTI with the user data.

Step 104: The NodeB broadcasts the identifier of the target user via the HS-SCCH channel, instructing the user to receive data.

The NodeB obtains the H-RNTI that is already associated with the user data from the corresponding related content for example, context, and broadcasts the H-RNTI via the HS-SSCH channel, instructing the corresponding user to receive data.

Step 105: The NodeB transmits the user data via the HS-PDSCH channel.

The UE listens on the HS-SSCH channel and when it determines that the broadcast user identifier is its own identifier, the UE receives data destined for itself from the HS-PDSCH channel according to the instruction.

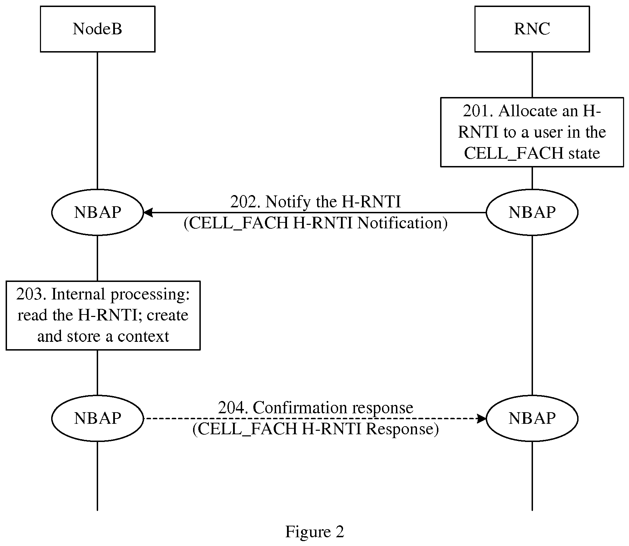

In step 102, the NodeB performs internal processing upon reception of the NBAP message which carries an H-RNTI allocated to the UE in the CELL_FACH state. This process is shown in Figure 2, including:
Step 201: The RNC allocates a dedicated H-RNTI to a UE in the CELL_FACH state.

When a UE transits from the RRC unconnected state to the CELL_FACH state, or from the CELL_PACH, URA_PCH or IDLE state to the CELL_FACH state, the RNC allocates a corresponding H-RNTI to the UE.

Step 202: The RNC sends an NBAP message (CELL_FACH H-RNTI Notification), notifying the NodeB of the H-RNTI.

Step 203: The NodeB receives the NBAP message via the Iub interface and processes the message as follows:
reading the H-RNTI from the NBAP message; and
creating and storing the corresponding related content, for example, context, for each received H-RNTI. The created related content may include a field that records an H-RNTI and a field that records a TSN. The H-RNTI is stored in the field that records the H-RNTI and the TSN of the user data corresponding to the H-RNTI is stored in the field that records the TSN.

Step 204: The NodeB sends an NBAP response message (CELL_FACH H-RNTI Response) to the RNC, indicating that the NodeB has received and correctly processed the H-RNTI. This step is optional.

Because currently there is no special Iub CP signaling for example, NBAP signaling, to notify the NodeB of the H-RNTI of a UE in the CELL_FACH state, a new message may be constructed specially for notifying the NodeB of the H-RNTI of the UE in the CELL_FACH state, for example, the CELL_FACH H-RNTI Notification/Response message in the above procedure.

Embodiment 2: In this embodiment, the RNC notifies the NodeB of the dedicated H-RNTI allocated to a UE in the Iub FP mode and the NodeB schedules and transmits user data.

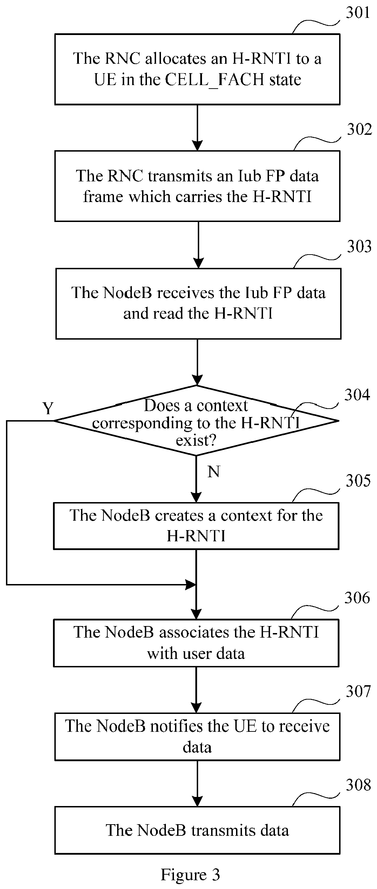

Figure 3 shows the procedure in the second embodiment of the invention, including:
Step 301: The RNC allocates a dedicated H-RNTI to a UE in the CELL_FACH state.
Step 302: The RNC constructs an Iub FP data frame, which carries the H-RNTI, and sends the Iub FP data frame to the NodeB.

The Iub FP data frame that carries the H-RNTI sent by the RNC may be defined in the structure shown in Figure 4. The data frame includes a header part and a payload part. The payload part includes in turn PDU data of one or more users. The PDU field of every user includes an HS-DSCH-RNTI field that records an H-RNTI to identify the target user of the corresponding PDU. The PDU shown in Figure 4 is not limited to the MAC-d PDU but also may be the MAC-c or another type of PDU.

Step 303: The NodeB receives the Iub FP data frame from the RNC and reads the H-RNTI carried in the data frame.

Step 304: The NodeB checks whether the related content, for example, context, corresponding to the H-RNTI already exists and if so, continues with step 306, or else, continues with step 305.

Step 305: When no related content, for example, context, corresponding to the H-RNTI exists, the NodeB creates and stores the related content, for example, context, corresponding to the H-RNTI. The created related content may include a field that records an H-RNTI and a field that records a TSN, and the H-RNTI is stored in the field that records the H-RNTI.

Step 306: When the related content, for example, context, corresponding to the H-RNTI exists, or the related content, for example, context, is created in step 305, the NodeB associates the H-RNTI with the corresponding user data.

In this step, the NodeB reorganizes the data in the payload part of the Iub FP frame to reconstruct the HS-DSCH data frame so that the reconstructed HS-DSCH data frame carries PDUs of one user. The reconstructed HS-DSCH data frame carries a TSN which indentifies the HS-DSCH data frame. The reconstruction of a data frame by the NodeB is implemented according to the prior art.

The NodeB records the TSN of the HS-DSCH data frame in the related content, such as context, of the corresponding H-RNTI to associate the H-RNTI with the user data.

Step 307: The NodeB obtains the H-RNTI that is already associated with the user data from the corresponding related content, for example, context, and broadcasts the H-RNTI via the HS-SSCH channel, instructing the corresponding user to receive data.

Step 308: The NodeB transmits the HS-DSCH data frame via the HS-PDSCH channel.

The UE listens on the HS-SSCH channel and when it determines that the broadcast identifier is its own identifier, the UE receives data destined for itself from the HS-PDSCH channel according to the instruction.

In the two embodiments above, when the RNC learns that a UE transits from the CELL_FACH state to the RRC unconnected state or the CELL_PCH/URA_PCH/IDLE state, the RNC may instruct the NodeB via an NBAP message to release the related content, for example, context, corresponding to the H-RNTI of the user stored in the above procedure; when receiving the NBAP message, the NodeB deletes the specified related content, for example, context.

A comparison between the first embodiment and the second embodiment shows that in the second embodiment, when the RNC sends the data frame to the NodeB, the H-RNTI is carried in the data frame, while in the first embodiment, a new signaling message is created to notify the H-RNTI to the NodeB. Therefore, the method in the second embodiment can save signaling overhead and save configuration time, thus improving the system efficiency.

An embodiment of the invention also provides a temporary identifier transmitting apparatus.

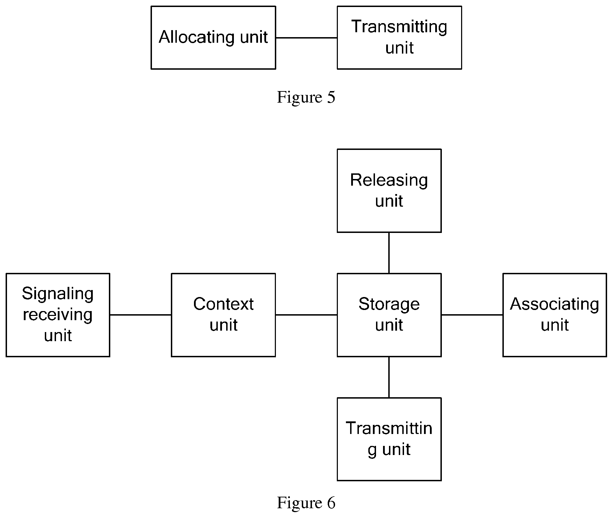

Figure 5 shows the temporary identifier transmitting apparatus according to the embodiment of the invention. The apparatus may be integrated into an RNC and include an allocating unit and a transmitting unit. The allocating unit is adapted to allocate an H-RNTI to a UE in the CELL_FACH state; and the transmitting unit is adapted to send the H-RNTI allocated by the allocating unit to a NodeB. The transmitting unit sends signaling to the NodeB. The signaling carries the H-RNTI allocated by the allocating unit. The temporary identifier transmitting apparatus may further include a data transmitting unit, adapted to send a data frame to the NodeB, the data frame carrying the H-RNTI allocated by the allocating unit.

Another embodiment of the invention provides a temporary identifier obtaining apparatus.

Figure 6 shows a structure of the temporary identifier obtaining apparatus provided in the embodiment of the invention. The apparatus may be integrated into a NodeB and include a receiving unit and an obtaining unit, where the receiving unit may be a signaling receiving unit, and the receiving unit and the obtaining unit may exist independently or be integrated together (Figure 6 shows the structure where the obtaining unit is integrated into the signaling receiving unit). The apparatus may further include a context unit, a storage unit, an associating unit, and a transmitting unit.

The signaling receiving unit is adapted to receive signaling transmitted by the RNC and obtain the H-RNTI of the UE in the CELL_FACH state allocated by the RNC from the signaling.

The context unit is adapted to create a context corresponding to the H-RNTI according to the H-RNTI obtained by the receiving unit and store the created related content, for example, context, into the storage unit.

The associating unit is adapted to associate the H-RNTI stored in the storage unit with the corresponding user data which may be received by the data receiving unit from the RNC and store the association into the storage unit; the associating unit stores the H-RNTI and the TSN of the corresponding user data into the related content, for example, context, corresponding to the H-RNTI in the storage unit.

The transmitting unit is adapted to obtain the H-RNTI from the storage unit and broadcast the H-RNTI on the HS-SCCH channel, instructing the corresponding user to receive the user data, and transmit the user data of the corresponding user on the HS-PDSCH channel.

The apparatus may further include a releasing unit. When learning that the UE transits from the CELL_FACH state to the RRC unconnected state or the CELL_PCH/URA_PCH/IDLE state, the releasing unit releases the related content, for example, context, of the H-RNTI of the user stored in the storage unit.

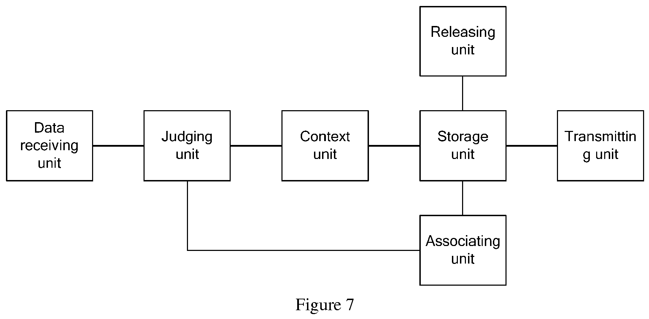

Figure 7 shows the structure of a temporary identifier obtaining apparatus provided in another embodiment of the invention. The apparatus may be integrated into a NodeB and include a receiving unit and an obtaining unit, where the receiving unit may be a data receiving unit. The receiving unit and the obtaining unit may exist independently or be integrated together (Figure 7 shows the structure where the obtaining unit is integrated into the data receiving unit). The apparatus may further include a judging unit, a context unit, an associating unit, a storage unit and a transmitting unit.

The data receiving unit is adapted to receive a data frame transmitted by the RNC and obtain the H-RNTI of a user in the CELL-_FACH state from the data frame.

The judging unit is adapted to query the storage unit to check whether the related content, for example, context, corresponding to the H-RNTI already exists according to the H-RNTI received by the receiving unit, and if the related content exists, instruct the associating unit to associate the H-RNTI with the corresponding user data, or else, instruct the context unit to create the related content, for example, context, corresponding to the H-RNTI.

The context unit is adapted to create the related content, for example, context, corresponding to the H-RNTI according to the H-RNTI obtained by the receiving unit and store the created related content, for example, context, into the storage unit.

The associating unit is adapted to associate the H-RNTI stored in the storage unit with the corresponding user data and store the association into the storage unit. In the process that the associating unit creates an association between the H-RNTI and the user data, the associating unit stores the H-RNTI and the TSN of the corresponding user data into the related content, for example, context, corresponding to the H-RNTI in the storage unit.

The transmitting unit is adapted to obtain the H-RNTI from the storage unit and broadcast the H-RNTI on the HS-SCCH channel, instructing the corresponding user to receive the user data, and transmit the user data of the corresponding user on the HS-PDSCH channel.

The apparatus may further include a releasing unit. When learning that the UE transits from the CELL_FACH state to the RRC unconnected state or the CELL_PCH/URA_PCH/IDLE state, the releasing unit releases the related content, for example, context, of the H-RNTI of the user stored in the storage unit.

In this embodiment, the UTRAN allocates an independent H-RNTI to a UE in the CELL_FACH state and the configuration by the RNC for the UE is transparent to the NodeB. When the RNC allocates an H-RNTI to a UE in the CELL_FACH state, a scheduling problem occurs in the prior art because of the lack of a notification mechanism from the RNC to the NodeB; as a result, the NodeB needs to rearrange the HS-DSCH frames during scheduling and the rearrangement is performed in the MAC-hs of the NodeB. To make a rearrangement, the NodeB needs to know the target user of the HS-DSCH frame so as to instruct the corresponding user to receive data via the HS-SCCH channel. For a UE in the CELL_FACH state, in the prior art, the NodeB is unclear whether the RNC has allocated an H-RNTI to the UE or unclear about the H-RNTI allocated to the UE. As a result, when the RNC transmits data of the user in the CELL_FACH state, the NodeB does not know who is the target user of the data and therefore is unable to make a rearrangement. The process of transmitting user data to a specific user in the CELL_FACH state, therefore, cannot be truly realized. In the embodiment of the invention, the above defect in the prior art is resolved by means of a process that the H-RNTI allocated to a UE in the CELL_FACH state is sent to the NodeB and the NodeB obtains the H-RNTI.

To sum up, in the forgoing embodiments of the invention, the NodeB is notified of the H-RNTI of a user in the CELL_FACH state and after the NodeB stores the H-RNTI, the NodeB may associate the H-RNTI with the corresponding user data and transmit the corresponding user data to the corresponding user according to the created association, so that the NodeB is able to perform data scheduling and transmit user data for users in the CELL_FACH state. Therefore, when the NodeB transmits data for a user in the CELL_FACH state, the NodeB may fully use the HSDPA mechanism to improve the spectrum efficiency and transport efficiency of the system.

The above H-RNTI is only a presentation of the temporary identifier allocated by the RNC to a user in the CELL_FACH state but the present invention is not limited to the above application scope or the above temporary identifier presentation.

Those skilled in the art understand that the accompanying drawings show only preferred embodiments of the invention and the units and procedures shown in the drawings are not necessarily mandatory in the present invention.

The sequence numbers of embodiments hereinabove are for ease of description and do not indicate any superiority or inferiority of the embodiments.

The solution stated in Claims is the scope of protection of the present invention.

Those skilled in the art understand that all or part processing in the method provided in the forgoing embodiments of the invention may be implemented by related hardware under the instruction of a program. The program may be stored in a computer readable storage medium.

It is apparent that those skilled in the art can make various modifications and variations to the invention without departing from the spirit and scope of the invention. The present invention is intended to cover these modifications and variations provided that they fall in the scope of protection defined by the following claims or their equivalents.

Further embodiments of the present invention are provided in the following. It should be noted that the numbering used in the following section does not necessarily need to comply with the numbering used in the previous sections.
Embodiment 1. A method for obtaining a temporary identifier, comprising:
   receiving a data frame and obtaining from the data frame one or more temporary identifiers, each of which identifies a user in a Radio Resource Control (RRC) connected state.
Embodiment 2. The method according to embodiment 1, wherein after the step of obtaining the one or more temporary identifiers, further comprising: associating one of the one or more temporary identifiers with corresponding user data.
Embodiment 3. The method according to embodiment 2, wherein before the step of associating the one or more temporary identifiers with corresponding user data, further comprising:
   judging whether a context corresponding to one of the one or more temporary identifiers is already created and if the context corresponding to one of the one or more temporary identifiers is not already created, creating a corresponding context for the one or more temporary identifiers and associating one of the one or more temporary identifiers with the corresponding user data; and if the corresponding context is already created, associating one of the one or more temporary identifiers with the corresponding user data.
Embodiment 4. The method according to embodiment 2 or 3, wherein the step of associating the one or more temporary identifiers with corresponding user data comprises:
   creating a context corresponding to one of the one or more temporary identifiers and storing one of the temporary identifier and a Transmission Sequence Number (TSN) of the user data corresponding to the temporary identifier into the context.
Embodiment 5. The method according to embodiment 2, wherein after the step of associating the one or more temporary identifiers with corresponding user data, further comprising:
   broadcasting the one or more temporary identifiers, instructing a user corresponding to one of the one or more temporary identifiers to receive user data, and transmitting user data corresponding to one of the one or more temporary identifiers.
Embodiment 6. The method according to embodiment 5, wherein the step of transmitting user data corresponding to the one or more temporary identifiers comprises:
   generating a user data packet, which carries user data corresponding to one temporary identifier of the one or more temporary identifierss; and
   transmitting the generated user data packet via a High-Speed Physical Downlink Shared Channel (HS-PDSCH).
Embodiment 7. The method according to embodiment 1 or 5, wherein before the step of receiving a data frame, further comprising:
   receiving signaling transmitted by a Radio Network Controller (RNC), which carries the one or more temporary identifiers; and
   obtaining the one or more temporary identifiers from the signaling.
Embodiment 8. The method according to any one of embodiments 1 ,2 or 5, wherein when a User Equipment (UE) corresponding to one of the one or more temporary identifiers transits from the RRC connected state to any other state, further comprising:
   releasing the obtained temporary identifier.
Embodiment 9. The method according to embodiment 8, wherein the RRC connected state is a CELL_FACH state; the other state is an RRC unconnected state, IDLE state, CELL_PCH state, or URA_PCH state.
Embodiment 10. The method according to embodiment 1, wherein he data frame carries one or more temporary identifiers and corresponding user data.
Embodiment 11. temporary identifier obtaining apparatus, comprising:
   a receiving unit, adapted to receive a data frame; and
   an obtaining unit, adapted to obtain from the data frame a temporary identifier that identifies a user in a Radio Resource Control (RRC) connected state.
Embodiment 12. The temporary identifier obtaining apparatus according to embodiment 11, wherein the receiving unit is further adapted to receive signaling from a Radio Network Controller (RNC) and the signaling carries the one or more temporary identifiers; and
   the obtaining unit is further adapted to obtain the one or more temporary identifiers from the signaling.
Embodiment 13. The temporary identifier obtaining apparatus according to embodiment 11, wherein further comprising an associating unit, adapted to associate one of the one or more temporary identifiers with corresponding user data.
Embodiment 14. The temporary identifier obtaining apparatus according to embodiment 13, wherein further comprising:
   a context unit, adapted to create a context corresponding to one of the one or more temporary identifiers; and wherein
   the associating unit is further adapted to store one of the one or more temporary identifiers and a Transmission Sequence Number (TSN) of the user data corresponding to one of the one or more temporary identifiers into the context corresponding to one of the one or more temporary identifiers.
Embodiment 15. The temporary identifier obtaining apparatus according to embodiment 14, wherein further comprising:
   a judging unit, adapted to judge whether a context corresponding to one of the one or more temporary identifiers already exists according to the received temporary identifier and if the context corresponding to one of the one or more temporary identifiers already exists, instruct the associating unit to associate one of the one or more temporary identifiers with corresponding user data; otherwise, instruct the context unit to create a context corresponding to one of the one or more temporary identifiers.
Embodiment 16. The temporary identifier obtaining apparatus according to embodiment 13, wherein urther comprising a transmitting unit, adapted to broadcast the obtained temporary identifier and transmit user data corresponding to one of the one or more temporary identifiers.
Embodiment 17. The temporary identifier obtaining apparatus according to embodiment 16, wherein the transmitting unit is further adapted to generate a user data packet which carries user data corresponding to one of the one or more temporary identifiers and transmit the generated user data packet via a High-Speed Physical Downlink Shared Channel (HS-PDSCH).
Embodiment 18. The temporary identifier obtaining apparatus according to embodiment 13, wherein further comprising:
   a releasing unit, adapted to release the one or more temporary identifiers and an association between one of the one or more temporary identifiers and user data.
Embodiment 19. temporary identifier transmitting apparatus, comprising an allocating unit and a transmitting unit, wherein:
   the allocating unit is adapted to allocate a radio network temporary identifier to a user in a Radio Resource Control (RRC) connected state; and
   the transmitting unit is adapted to transmit the one or more temporary identifiers allocated by the allocating unit to a NodeB.
Embodiment 20. The temporary identifier transmitting apparatus according to embodiment 19, wherein the transmitting unit is a data transmitting unit, adapted to send a data frame which carries the one or more temporary identifiers.
Embodiment 21. The temporary identifier transmitting apparatus according to embodiment 19, wherein further comprising:
   a signaling transmitting unit, adapted to transmit signaling to a NodeB, wherein the signaling carries the one or more temporary identifiers allocated by the allocating unit.

## Claims

1. A method for obtaining a temporary identifier, comprising:
receiving, by a NodeB, a data frame or signaling by a Radio Network Controller, RNC, wherein the data frame or the signaling carries a dedicated High-Speed Downlink Shared Channel Radio Network Temporary Identifier, H-RNTI, of a User Equipment, UE, in a CELL_FACH state;
obtaining, by the NodeB, the dedicated H-RNTI from the data frame or signaling;
broadcasting, by the NodeB, the dedicated H-RNTI and transmitting, by the NodeB, user data corresponding to the dedicated H-RNTI, wherein the dedicated H-RNTI instructing the UE to receive the user data.

2. The method of claim 1, wherein:
the broadcasting, by the NodeB, the dedicated H-RNTI comprises: broadcasting, by the NodeB, the dedicated H-RNTI via a High-Speed Shared Control Channel, HS-SCCH; and
the transmitting, by the NodeB, user data corresponding to the dedicated H-RNTI, comprises: transmitting, by the NodeB, the user data corresponding to the dedicated H-RNTI via a High-Speed Physical Downlink Shared Channel, HS-PDSCH.

3. The method of claim 1 or 2, further comprising:
judging, by the NodeB, whether a context corresponding to the dedicated H-RNTI has already been created; and
if the context has not already been created, creating, by the NodeB, a corresponding context.

4. The method of any of claims 1 to 3, when the UE transits from the CELL-FACH state to any other state, further comprising:
releasing, by the NodeB, the dedicated H-RNTI.

5. A temporary identifier obtaining apparatus, comprising:
means for receiving a data frame or signaling by a Radio Network Controller, RNC, wherein the data frame or signaling carries a Dedicated High-Speed Downlink Shared Channel Radio Network Temporary Identifier, H-RNTI, of a User Equipment, UE, in a CELL_FACH state;
means for obtaining the dedicated H-RNTI from the data frame or signaling;
means for broadcasting the dedicated H-RNTI; and,
means for transmitting user data corresponding to the dedicated H-RNTI;
wherein the dedicated H-RNTI instructing the UE to receive the user data.

6. The apparatus of claim 5, wherein means for broadcasting the dedicated H-RNTI comprising: broadcasting the dedicated H-RNTI via a High-Speed Shared Control Channel, HS-SCCH; and,
means for transmitting user data corresponding to the dedicated H-RNTI comprising: transmitting the user data corresponding to the dedicated H-RNTI via a High-Speed Physical Downlink Shared Channel, HS-PDSCH.

7. The apparatus of claim 5 or 6, further comprising:
means for judging whether a context corresponding to the dedicated H-RNTI has already been created and if the context has not already been created, creating a corresponding context.

8. The apparatus of any of claims 5 to 7, further comprising:
means for releasing the dedicated H-RNTI when the UE transits from the CELL-FACH state to any other state.

9. A method for transmitting a temporary identifier, comprising:
allocating, by a Radio Network Controller, RNC, a dedicated High-Speed Downlink Shared Channel Radio Network Temporary Identifier, H-RNTI, to a user equipment, UE, in a CELL-FACH state;
transmitting, by the RNC, the dedicated H-RNTI to a NodeB in a data frame or signaling.

10. The method of claim 9, when the UE transits from the CELL-FACH state to any other state, further comprising:
instructing, by the RNC, the NodeB to release the dedicated H-RNTI.

11. A temporary identifier transmitting apparatus, comprising:
means for allocating a dedicated High-Speed Downlink Shared Channel Radio Network Temporary Identifier, H-RNTI, to a user equipment, UE, in a CELL-FACH state;
means for transmitting the dedicated H-RNTI to a NodeB in a data frame or signaling.

12. The apparatus of claim 11, further comprising:
means for instructing the NodeB to release the dedicated H-RNTI when the UE transits from the CELL-FACH state to any other state.

13. A method for transmitting and obtaining a temporary identifier, comprising:
allocating, by a Radio Network Controller, RNC, a dedicated High-Speed Downlink Shared Channel Radio Network Temporary Identifier, H-RNTI, to a user equipment, UE, in a CELL-FACH state;
transmitting, by the RNC, the dedicated H-RNTI to a NodeB in a data frame or signaling;
receiving, by the NodeB, the data frame or signaling;
obtaining, by the NodeB, the dedicated H-RNTI from the data frame or signaling;
broadcasting, by the NodeB, the dedicated H-RNTI and transmitting, by the NodeB, user data corresponding to the dedicated H-RNTI, wherein the dedicated H-RNTI instructing the UE to receive the user data.

14. The method of claim 13, wherein:
the broadcasting, by the NodeB, the dedicated H-RNTI comprises: broadcasting, by the NodeB, the dedicated H-RNTI via a High-Speed Shared Control Channel, HS-SCCH; and
the transmitting, by the NodeB, user data corresponding to the dedicated H-RNTI, comprises: transmitting, by the NodeB, the user data corresponding to the dedicated H-RNTI via a High-Speed Physical Downlink Shared Channel, HS-PDSCH.

15. A temporary identifier obtaining system, comprising:
a Radio Network Controller, RNC, of any of claims 11 to 12 and,
a NodeB of any of claims 5 to 8.
